# EUROPÄISCHE PATENTSCHRIFT

(11) **EP 3 440 782 B1**
(45) Veröffentlichungstag und Bekanntmachung des Hinweises auf die Patenterteilung: **15.07.2020**
(21) Anmeldenummer: 17714724.6
(22) Anmeldetag: 30.03.2017
(51) Int. Cl.: H04B 5/00, H02J 50/10, H01F 27/28, H01F 38/14, H01F 38/18, H02J 50/80

(54) **SYSTEM ZUR DRAHTLOSEN ÜBERTRAGUNG VON ENERGIE UND DATEN**
SYSTEM FOR WIRELESSLY TRANSMITTING ENERGY AND DATA
SYSTÈME DE TRANSMISSION SANS FIL D'ÉNERGIE ET DE DONNÉES

(30) Priorität: 06.04.2016 DE 202016101808 U; 21.04.2016 DE 102016206767
(43) Veröffentlichungstag der Anmeldung: 13.02.2019
(73) Patentinhaber: Fraunhofer-Gesellschaft zur Förderung der angewandten Forschung e.V., 80686 München (DE)
(72) Erfinder: FREY, Lothar, 91315 Höchstadt a.d. Aisch (DE); ENDRUSCHAT, Achim, 92367 Pilsach (DE); DITZE, Stefan, 91056 Erlangen (DE); HECKEL, Thomas, 90522 Oberasbach (DE); JOFFE, Christopher, 91056 Erlangen (DE); ROSSKOPF, Andreas, 90429 Nürnberg (DE); SCHRIEFER, Tom, 91090 Effeltrich (DE); KÖLPIN, Alexander, 96120 Bischberg (DE); TRAUTMANN, Martin, 90439 Nürnberg (DE); SANFTL, Benedikt, 83083 Riedering (DE)
(74) Vertreter: Pfenning, Meinig & Partner mbB
(86) Internationale Anmeldenummer: PCT/EP2017/057529
(87) Internationale Veröffentlichungsnummer: WO 2017/174431

(56) Entgegenhaltungen:
- WO-A2-2013/069472
- US-A- 4 837 556
- T. BIELER ET AL: "Contactless power and information transmission", IEEE TRANSACTIONS ON INDUSTRY APPLICATIONS., Bd. 38, Nr. 5, 7. November 2002 (2002-11-07), Seiten 1266-1272, XP055375338, US ISSN: 0093-9994, DOI: 10.1109/TIA.2002.803017

## Beschreibung

Die Erfindung betrifft ein System zur drahtlosen Übertragung von Energie und Daten, das bei mechanischen Systemen mit mindestens einem Drehmomente übertragenden rotierenden Element einsetzbar sein kann. Dies betrifft insbesondere den Einsatz an An- oder Abtriebswellen mindestens eines Rotors, wie dies beispielsweise Rotoren von Windenergieanlagen sind. Das System kann aber auch an anderen entsprechend ausgebildeten Anlagen, wie z.B. Anordnungen mit Wälzlagern und/oder an Roboterarmen, Fertigungsgeräten in Industrie, dem Lebensmittelbereich oder der Medizintechnik eingesetzt werden. Alternativ kann das System zur drahtlosen Übertragung von Energie und Daten auch bei stationären oder teilstationären Systemen zum Einsatz kommen, bei denen sich die Teilsysteme relativ zueinander nicht oder nur zeitlich begrenzt in Bewegung befinden. Mögliche Anwendungen umfassen kontaktlose Steckverbindungen, bei denen Umgebungseinflüsse den Einsatz kontaktgebundener Systeme verbieten oder erschweren. Mögliche Einsatzgebiete umfassen beispielsweise kontaktlose Steckverbindungen im Bereich der Agrar- und Bautechnik, Medizintechnik, Lebensmittelindustrie, der verarbeitenden chemischen Industrie oder maritime Anwendungen. Es können als Daten insbesondere Mess- und/oder Steuersignale übertragen werden. Es sollte auch eine bidirektionale Datenübertragung möglich sein.

Üblicherweise wurden in der Vergangenheit für rotierende Systeme dazu technische Lösungen, die Schleifringe genutzt haben, eingesetzt. Für Steckersysteme bei stationären Anwendungen musste ein erhöhter Material- und Kostenaufwand mit elektrischen, mechanischen und informationstechnischen Schutzeinrichtungen betrieben werden, um die sichere Übertragung der Energie- und Datensignale zu gewährleisten. Diese bereiten aber wegen auftretender Schwingungen und Verschleiß Probleme, so dass dauerhaft keine konstanten Verhältnisse eingehalten werden können. Bei der Übertragung von Daten kann es wegen Kontaktproblemen zu Übertragungsfehlern kommen.

Es gab daher Bestrebungen zumindest eine getrennte Übertragung von Energie oder Daten drahtlos zu erreichen. Solche technischen Lösungen nutzen prinzipiell elektrische induktiv oder kapazitiv arbeitende Systeme in unterschiedlichster Form. Dabei kamen auch Systeme zum Einsatz, bei denen elektrische Spannungen mittels Elektro- oder Permanentmagneten induziert werden.

Ein Problem, dass sich bei einer zeitlich und örtlich überlagerten Übertragung elektrischer Energie und Daten in drahtloser Form ergibt, ist eine mögliche gegenseitige Beeinflussung, so dass es zu Fehlern bei der Datenübertragung und/oder zu Energieverlusten kommen kann. Dieses Problem tritt insbesondere bei einer gleichzeitigen uni- oder bidirektionalen Übertragung von Daten und Energie auf. Die Übertragung erfolgt dabei gleichzeitig oder in sehr kleinen zeitlichen Abständen zueinander, bei denen noch elektrische oder elektromagnetische Wechselfelder von der Energieübertragung ausgebildet sind, wenn eine Übertragung von Daten erfolgt.

So sind aus WO 2013/069472 A2 eine elektronische Einrichtung und ein Transmissionssystem bekannt.

US 4,837,556 A betrifft eine Signalübertragungsanordnung. Von Thierry Bieler u.a. sind in "Contactless Power and Information Transmission"; IEEE TRANSACTIONS ON INDUSTRY APPLICATIONS; Bd. 38, Nr. 5; 1. September 2002, Seiten 1266-1272 Möglichkeiten für die kontaktlose Übertragung von Daten und Energie beschrieben.

Es ist daher Aufgabe der Erfindung, Möglichkeiten für eine gleichzeitige zumindest nahezu störungs- und verschleißfreie drahtlose Übertragung elektrischer Energie und von Daten anzugeben, die über große Zeiträume ohne Wartung und Reparaturarbeiten genutzt werden können.

Erfindungsgemäß wird diese Aufgabe mit einem System, das die Merkmale des Anspruchs 1 aufweist, gelöst. Vorteilhafte Ausgestaltungen und Weiterbildungen der Erfindung können mit in untergeordneten Ansprüchen realisiert werden.

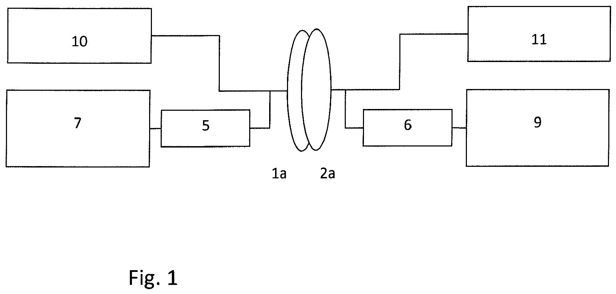

Bei dem erfindungsgemäßen System sind mindestens zwei in einem Abstand zueinander angeordnete Spulen oder elektrische Leiterbahnen für die Übertragung von Energie und/oder für die Übertragung von Daten vorhanden. Dabei sind jeweils mindestens eine elektrische Spule zur Übertragung von Energie und eine 5, jeweils korrespondierende elektrische Spule oder elektrische Leiterbahn zur Übertragung von Daten an jeweils eine elektrische Wechselspannungsquelle angeschlossen. Eine an eine elektrische Spule oder elektrische Leiterbahn angeschlossene elektrische Wechselspannungsquelle ist modulierbar, so dass die jeweilige Frequenz, der Betrag oder die Phase der elektrischen Wechselspannung für die Übertragung von Daten beeinflussbar ist. Die elektrischen Spulen oder elektrischen Leiterbahnen zur Übertragung von Daten sind mit elektrischer Spannung mit einer Frequenz, die kleiner als die Frequenz mit der eine elektrische Spannung zur Übertragung von Energie mittels der elektrischen Spulen oder elektrischen Leiterbahnen zur Übertragung von Energie eingesetzt ist, betrieben. Dadurch können die Datenübertragungssicherheit erhöht und die Datenfehlerübertragungsrate reduziert werden. Die Übertragungsrate ist dadurch zwar limitiert. Sie ist aber für sehr viele Anwendungsfälle noch ausreichend hoch und kann im Bereich von mindestens 1 kB/s gehalten werden. Im Ausprägungsfall mit lediglich zwei in einem Abstand zueinander angeordneter Spulen oder elektrischer Leiterbahnen kann sowohl für die Übertragung der Energie als auch der Daten die gleiche Spule oder elektrische Leiterbahn verwendet werden. Figur 1 zeigt ein solches System.

In einer vorteilhaften Ausprägung sollte die Frequenz zur Übertragung von Energie mindestens fünffach, bevorzugt mindestens zehnfach größer als die Frequenz zur Übertragung von Daten sein und im Bereich 5 kHz bis 15 kHz, bevorzugt zwischen 7,5 und 10 kHz liegen. Dementsprechend können für die Übertragung von Energie Frequenzen im Bereich ab ca. 50 kHz eingesetzt werden. Die für die Übertragung von Daten und Energie eingesetzten Frequenzen sollten einen Abstand von mindestens 40 kHz zueinander haben. Der Abstand zwischen der Frequenz zur Übertragung der Energie und der Daten kann durch spezielle Kodierverfahren, wie zum Beispiel Spreizcode reduziert werden. Dies ermöglicht einen höheren Freiheitsgrad bei der Wahl der Übertragungsfrequenzen für Energie und Daten, was auch zu kompakteren Gesamtsystemen oder erhöhtem Gestaltungsfreiraum führen kann.

Im eingeschwungenen Zustand der Energieübertragung treten Harmonische des Energieübertragungssignals üblicherweise oberhalb der Frequenz der Energieübertragung auf. Unterhalb der Frequenz der Energieübertragung sind im eingeschwungenen Zustand keine signifikanten Störungen zu erwarten. Die Frequenz der Datenübertragung wird deshalb in einer vorteilhaften Ausführung kleiner als die Frequenz der Energieübertragung gewählt.

In einer beispielhaften Auslegung sollte die Frequenz zur Übertragung der Daten im Bereich von 5 kHz bis 10 kHz und die Frequenz zur Übertragung der Energie im Bereich von 50 kHz bis 500 kHz liegen.

Vorteilhaft sollte an mindestens eine elektrische Spule oder elektrische Leiterbahn zur Übertragung von Daten ein Filter, bevorzugt ein Bandpassfilter, oder Tiefpassfilter angeschlossen sein, mit dem eine Überlagerung der Frequenzen, die zur Übertragung von Daten und von Energie eingesetzt sind, verhinderbar ist. Mit einem solchen Filter können elektrische Signalkomponenten, die bei der Übertragung von Energie ausgebildet werden, die induktiv übertragenen Datensignale nicht beeinflussen und vor einer Bearbeitung und/oder Auswertung der übertragenen Daten separiert werden. Dabei wirkt sich auch ein ausreichend großer Abstand der jeweils eingesetzten unterschiedlichen Frequenzen günstig aus.

Das erfindungsgemäße System kann bezüglich der Datenübertragung sowohl bei einer analogen Modulation wie beispielsweise Phasen-, Frequenz oder Amplitudenmodulation, als auch digitalen Modulationsverfahren eingesetzt werden.

Die Ebenen A in denen die einzelnen Windungen der elektrischen Spulen oder Leiterbahnen zur Übertragung von Energie angeordnet sind und die mittleren Längsachsen B der Windungen der elektrischen Spulen oder Leiterbahnen zur Übertragung von Daten sind nicht parallel zueinander ausgerichtet.

Im Fall von zwei Spulen- oder Leiterbahnpaaren sollten diese für eine vorteilhafte Auslegung in einem Winkel im Bereich zwischen 45° und 90° zueinander, besonders vorteilhaft senkrecht zueinander ausgerichtet sein.

In einer weiteren vorteilhaften Ausführungsform kann der innere Durchmesser oder freie Querschnitt, der von Windungen der elektrischen Spulen zur Übertragung von Energie umschlossen ist, größer als der äußere Durchmesser oder die äußeren Abmessungen der Windungen der elektrischen Spulen zur Übertragung von Daten sein.

Die Windungen jeder elektrischen Spule zur Übertragung von Energie soll in einer respektiven Ebene A angeordnet sein, in der eine an einem stirnseitigen äußeren Rand der korrespondierenden elektrischen Spule zur Übertragung von Daten angeordnete Windung angeordnet ist.

Eine elektrische Spule zur Übertragung von Energie sollte mit einer oder mehreren Windungen und eine Spule zur Übertragung von Daten ebenfalls mit einer oder mehreren Windungen ausgebildet sein.

Es können jedoch auch nicht ganzzahlige Windungen oder Windungszahlen kleiner 1, also segmentförmige Windungen zum Einsatz kommen und so elektrische Leiterbahnen bilden. Neben kreisförmigen elektrischen Spulen ist auch eine Kombination/Ersatz mit/durch ovale, eckige oder frei geformte Geometrien möglich.

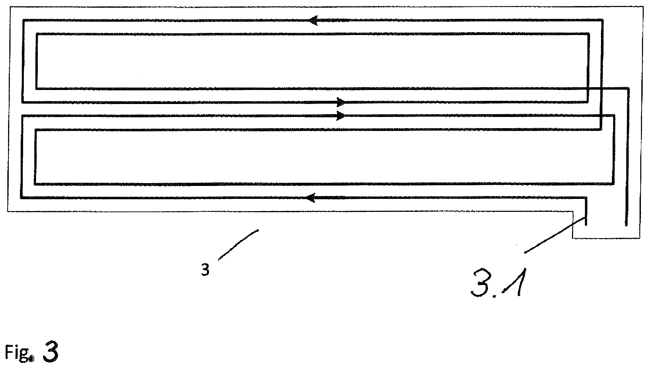

Eine elektrische Spule für die Datenübertragung kann auch eine 8-förmige Geometrie aufweisen, wobei die Windungen der eine acht ausbildenden Geometrie einen entgegen gesetzten Wicklungssinn haben können (siehe Fig. 3).

Die elektrischen Spulen oder elektrischen Leiterbahnen zur Übertragung von Daten sollten bevorzugt orthogonal zu den elektrischen Spulen oder elektrischen Leiterbahnen zur Übertragung von Energie angeordnet oder um die mittlere Längsachse B gebogen sein, wenn mehr als zwei elektrische Spulen genutzt werden, sein. Die Übertragung von Energie und Daten ist gleichzeitig möglich. Dies gilt auch für den oben skizzierten Fall, wenn lediglich ein Spulen- oder Leiterbahnenpaar 1a und 2a verwendet wird.

Die Windungen der elektrischen Spulen oder Leiterbahnen zur Übertragung von Energie sollten jeweils in einer Ebene A angeordnet sein. Dies bringt gegenüber einer mehrlagigen Ausbildung solcher elektrischer Spulen oder Leiterbahnen, bei denen Windungen oder elektrische Leiterbahnen in mehreren Ebenen angeordnet sind, Vorteile.

Die Windungen der elektrischen Spulen zur Übertragung von Daten sollen jeweils spiralförmig gewickelt eine ringförmige Spule bilden. Es kann aber auch eine konisch ausgebildete elektrische Spule genutzt werden, die sich in Richtung ihrer mittleren Längsachse in ihren äußeren Abmessungen verändert und beispielsweise kegel- oder pyramidenstumpfförmig ausgebildet ist.

In einer weiteren Ausführungsform kann der innere Durchmesser oder freie Querschnitt, der von Windungen einer der elektrischen Spulen zur Übertragung von Daten umschlossen ist, größer als der äußere Durchmesser oder die äußeren Abmessungen der Windungen der jeweils anderen elektrischen Spule zur Übertragung von Daten sein.

Zusätzlich können magnetisch feldführende Konstruktionselemente eingebracht werden oder mechanische Funktionsbaugruppen aus magnetisch feldführendem Material gefertigt sein, woraus sich Vorteile ergeben. Beispielsweise können die Konstruktionsbauelemente aus magnetischen Werkstoffen (z.B. Weich- oder Hartmagnetika) gefertigt sein, die zur verbesserten Feldführung oder zur temporären Zwischenspeicherung magnetischer Energie führen. Dadurch können insbesondere die Induktivitäten sowie die Kopplung des Übertragers bei der Übertragung von Daten und Energie erhöht werden, wodurch der Wirkungsgrad erhöht und die Verlustenergie reduziert werden kann. Eine ähnliche Wirkung kann erreicht werden, indem konventionelle Konstruktionsmaterialien wie zum Beispiel Kunststoff oder Metall genutzt werden, jedoch einzelne Konstruktionselemente aus magnetischen Werkstoffen hinzugefügt werden.

Mit dem erfindungsgemäßen System kann eine gemeinsame und gleichzeitige Übertragung elektrischer Energie und Daten zumindest nahezu störungsfrei erfolgen. Die elektrischen Spulen oder elektrischen Leiterbahnen zur Übertragung von Energie und Daten können räumlich sehr nah nebeneinander angeordnet werden. Es sind auch Abstände von wenigen Millimetern möglich, wodurch der erforderliche Bauraum entsprechend klein gehalten werden kann.

Über geeignete Modulationsverfahren und Kodierungen kann das Datensignal in digitalisierter Form gut von den elektromagnetischen Wellen, die für die Übertragung von Energie genutzt werden, getrennt werden. Zusätzlich können bei einer analogen Übertragung unterschiedliche Frequenzen für Energie und Datensignale verwendet und diese über geeignete Filter (analog und digital) voneinander getrennt werden. Dies ist auch sequentiell und simultan in entgegengesetzter Richtung möglich. Es besteht die Möglichkeit, Daten gleichzeitig in entgegengesetzter Richtung zwischen elektrischen Spulen oder elektrischen Leiterbahnen, die für eine Übertragung von Daten genutzt werden genutzt werden, zu übertragen. Energie sollte dagegen gleichzeitig nur in eine Richtung übertragen werden.

Das System arbeitet verschleißfrei und ist unempfindlich gegenüber äußeren Einflüssen, wie z.B. Feuchtigkeit, Schmiermittel oder Verschmutzung. Auch ist die Datenübertragung, durch die beispielsweise orthogonalen, ineinander liegenden, 8-förmigen elektrischen Spulen zur Übertragung von Daten, tolerant gegenüber einem axialen und radialen Lagerspiel einer Lagerung einer rotierenden Welle. Diese Toleranz ist nicht nur bei getrennten elektrischen Spulen für Übertragung von jeweils Daten und Energie nutzbar. Dies gilt auch, wenn eine elektrische Spule zur Übertragung von Energie zum simultanen Übertragen von Daten genutzt wird.

Außerdem ist es kostengünstig und kompakt herstellbar, so dass auch der erforderliche Bauraum entsprechend klein sein kann.

Zur Speicherung elektrischer Energie können die elektrischen Spulen zur Übertragung elektrischer Energie jeweils an einen Akkumulator oder elektrischen Kondensator angeschlossen sein.

Elektrische Spulen zur Übertragung von Daten können an einen Digital-Analog-Wandler und/oder einen Analog-Digital-Wandler angeschlossen sein. Die Daten können von mindestens einem Sensor, einer elektronischen Steuer- oder Regeleinheit und/oder einer Datenverarbeitungseinheit an eine elektrische Spule zur Übertragung von Daten angeschlossen sein. Eine Übertragung unterschiedlicher Daten kann beispielsweise mittels eines Multiplexers in sequentieller Form realisiert werden.

Als modulierbare elektrische Wechselspannungsquelle können beispielsweise Halb- oder Vollbrücken, Verstärkerschaltungen, Schaltungen mit einzelnen schaltenden oder oszillierenden Bauelementen oder Hochfrequenzoszillatoren eingesetzt werden. Solche Schaltungen können beispielsweise in Digital Direct Synthesis Technologie, bei denen elektrische gepulste oder Wechselspannungen digital realisiert werden, ausgebildet sein. In einer anderen Ausführungsform kann das Zeitbereichssignal digital erzeugt und über einen Digital-Analog-Wandler ausgegeben werden.

Bevorzugt alle elektrischen Spulen oder elektrischen Leiterbahnen eines erfindungsgemäßen Systems können in einem Gehäuse aus ferromagnetischem Werkstoff aufgenommen sein.

Für die Übertragung elektrischer Energie und die Übertragung von Daten sollten jeweils unterschiedliche Frequenzen der elektrischen Wechselspannung genutzt werden.

Nachfolgend soll die Erfindung beispielhaft erläutert werden.

Dabei zeigen:
Figur 1 in schematischer Form ein Blockschaltbild eines Beispiels eines erfindungsgemäßen Systems;
Figur 2 in schematischer Schnittdarstellung ein Beispiel eines erfindungsgemäßen Systems und
Figur 3 ... in ebenfalls schematischer Darstellung ein Beispiel einer elektrischen Spule, die für die Übertragung von Daten vorteilhaft einsetzbar ist, mit einer Ausbildung der Windungen in Form einer 8.

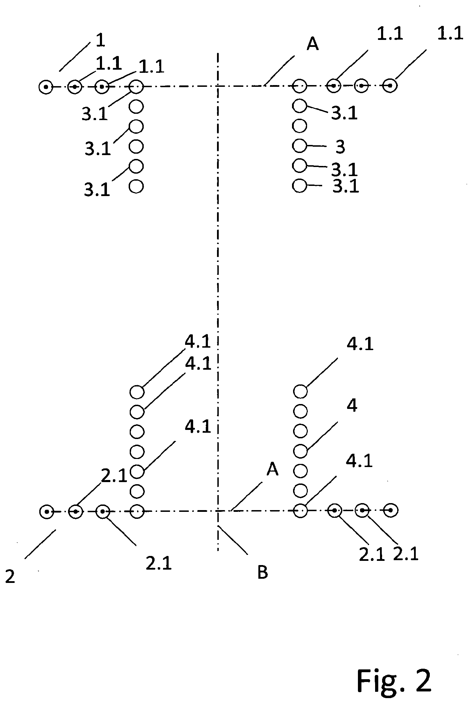

Bei dem in Figur 2 gezeigten System sind zwei elektrische Spulen 1 und 2 zur Übertragung von Energie sowie zwei weitere elektrische Spulen 3 und 4 zur Übertragung von Daten jeweils in einem Abstand zueinander angeordnet.

Das in Figur 1 gezeigte System nutzt für die Datenübertragung dieselben elektrischen Spulen 1a und 2a, die für die Energieübertragung eingesetzt werden. Das Datensignal wird primär- sowie sekundärseitig über Filter 5 und 6 von der Energieübertragung entkoppelt. Dabei sind die Filter 5 und 6 jeweils vor eine Datenempfangs- und -sendeeinheit 7 und 9 geschaltet, so dass in die Datenempfangs- und -sendeeinheiten 7 und 9 lediglich Datensignale mit entsprechend kleinerer Frequenz als die Frequenz mit der die Energieübertragung erfolgt, gelangen können. Die Datensignale können in den Empfangseinheiten 7 und 9 verarbeitet oder an eine nicht dargestellte Auswerteeinheit weitergeleitet werden.

Die elektrischen Spulen 1a und 2a sind bei dem gezeigten Beispiel jeweils an einen Elektroenergiespeicher, beispielsweise einen Akkumulator oder direkt an einen Verbraucher 11 angeschlossen. Bei diesem Beispiel werden die Daten mit einer Frequenz von 8 kHz und die Energie mit einer Frequenz zwischen 100 kHz und 500kHz übertragen. Die Filter 5 und 6 sind Tiefpassfilter, die Frequenzen oberhalb 10 kHz sperren. Außerdem ist an eine elektrische Spule 1a eine Schaltung 10 angeschlossen, mit der eine Wechselspannung erzeugt wird. Diese Schaltung kann beispielsweise als taktende Halb- oder Vollbrücke oder mit lediglich einem einzelnen taktenden Leistungsschalter realisiert werden. In einer beispielhaften Ausführungsform können neben hart schaltenden Leistungsendstufen auch weich schaltende Wandlertopologien, wie zum Beispiel Resonanzwandler zum Einsatz kommen.

Wie aus Figur 2 hervorgeht, können die Wicklungen 1.1 und 2.1 der elektrischen Spulen zur Übertragung von Energie 1 und 2 jeweils in einer Ebene A ringförmig um die mittlere Längsachse B ausgebildet sein. Bei diesem Beispiel sind die elektrischen Spulen 1 und 2 mit gleichen Außendurchmessern ausgebildet. Es können auch die gleichen Innendurchmesser gewählt werden. Dies betrifft auch die Anzahl der Windungen 1.1 und 2.1.

Des Weiteren sind zwei ringförmige elektrische Spulen 3 und 4 zur Übertragung von Daten vorhanden, deren mittlere Längsachse B senkrecht zu den Ebenen A ausgerichtet ist.

Die Durchmesser der elektrischen Spulen 3 und 4 unterscheiden sich voneinander. Der Durchmesser der elektrischen Spule 3 ist dabei bei diesem Beispiel kleiner als der Durchmesser der elektrischen Spule 4. Die Außendurchmesser der elektrischen Spule(n) 3 und/oder 4 können auch ≤ als der innere Durchmesser der elektrischen Spulen 1 und/oder 2 zur Übertragung von Energie sein.

In einer anderen Ausführungsform können jedoch auch die Spule 3 und 4 für die Energieübertragung und Spule 1 und 2 für die Datenübertragung genutzt werden.

Wie aus Figur 2 hervorgeht, kann eine stirnseitig angeordnete Windung 3.1 und/oder 4.1 in einer Ebene A, in der Windungen 1.1 und/oder 2.1 einer elektrischen Spule 1 und/oder 2 zur Übertragung von Energie angeordnet ist/sind, angeordnet sein.

Analog zu den Durchmessern kann man auch nicht rotationssymmetrisch ausgebildete elektrische Spulen 1, 2, 3 und/oder 4 mit entsprechenden Abmaßen und freien Querschnitten zwischen den Windungen 1.1, 2.1, 3.1 und 4.1 einsetzen.

Die Figur 3 zeigt ein Beispiel einer elektrischen Spule 3 oder 4, die für die Übertragung von Daten eingesetzt werden kann. Dabei sind die Windungen in Form einer 8 ausgebildet und es kann so ein elektrischer Stromfluss in entgegengesetzter Richtung in den beiden die 8 bildenden Bögen ausgenutzt werden, was mit den Pfeilen angedeutet ist. Dadurch kann die Reichweite und die Übertragungssicherheit erhöht werden.

## Patentansprüche

1. System zur drahtlosen Übertragung von Energie und Daten, bei dem mindestens zwei in einem Abstand zueinander angeordnete Spulen (1, 2, 1a, 2a, 3, 4) oder elektrische Leiterbahnen für die Übertragung von Energie vorhanden und
jeweils mindestens eine elektrische Spule (1, 2, 1a, 2a, 3, 4) zur Übertragung von Energie und mindestens eine jeweils korrespondierende elektrische Spule (1, 2, 1a, 2a, 3, 4) oder elektrische Leiterbahn zur Übertragung von Daten an jeweils eine elektrische Wechselspannungsquelle angeschlossen sind, wobei
mindestens eine elektrische Wechselspannungsquelle modulierbar ist, wobei
die elektrischen Spulen (1, 2, 1a, 2a, 3, 4) oder elektrischen Leiterbahnen zur Übertragung von Daten mit elektrischer Spannung mit einer Frequenz, die kleiner als die Frequenz mit der eine elektrische Spannung zur Übertragung von Energie mittels der elektrischen Spulen (1, 2, 1a. 2a, 3, 4) oder elektrischen Leiterbahnen zur Übertragung von Energie eingesetzt ist, betrieben sind und
die Windungen (1.1, 2.1) jeder elektrischen Spule (1, 2) zur Übertragung von Energie in einer respektiven Ebene A angeordnet sind, in der eine an einem stirnseitigen äußeren Rand der korrespondierenden elektrischen Spule (3, 4) zur Übertragung von Daten angeordnete Windung (3.1, 4.1) angeordnet ist und
die Windungen (3.1, 4.1) der elektrischen Spulen (3, 4) zur Übertragung von Daten jeweils spiralförmig eine ringförmige Spule (3, 4) bilden, wobei
die Ebenen A in denen die einzelnen Windungen (1.1, 2.1) der elektrischen Spulen (1, 2) zur Übertragung von Energie angeordnet sind und die mittleren Längsachsen B der Windungen (3.1, 4.1) der elektrischen Spulen (3, 4) zur Übertragung von Daten nicht parallel zueinander ausgerichtet sind.

2. System nach Anspruch 1, **dadurch gekennzeichnet, dass** die Frequenz zur Übertragung von Energie mindestens fünffach, bevorzugt mindestens zehnfach größer als die Frequenz zur Übertragung von Daten ist.

3. System nach Anspruch 1 oder 2, **dadurch gekennzeichnet, dass** die Frequenz zur Übertragung von Daten im Bereich 5 kHz bis 15 kHz liegt.

4. System nach einem der vorhergehenden Ansprüche, **dadurch gekennzeichnet, dass** an mindestens eine elektrische Spule (1, 2, 1a, 2a, 3, 4) oder elektrische Leiterbahn zur Übertragung von Daten ein Filter (5, 6), bevorzugt ein Bandpassfilter, Tiefpassfilter angeschlossen ist, mit dem eine Trennung der Frequenzen, die zur Übertragung von Daten und von Energie eingesetzt sind, erreichbar und deren Überlagerung verhinderbar ist.

5. System nach einem der vorhergehenden Ansprüche, **dadurch gekennzeichnet, dass** die Ebenen A in denen die einzelnen Windungen (1.1, 2.1) der elektrischen Spulen (1, 2) zur Übertragung von Energie angeordnet sind und die mittleren Längsachsen B der Windungen (3.1, 4.1) der elektrischen Spulen (3, 4) zur Übertragung von Daten in einem Winkel im Bereich zwischen 45° und 90°, bevorzugt senkrecht zueinander ausgerichtet sind.

6. System nach einem der vorhergehenden Ansprüche, **dadurch gekennzeichnet, dass** der innere Durchmesser oder freie Querschnitt, der von Windungen (1.1, 2.1) der elektrischen Spulen (1, 2) zur Übertragung von Energie umschlossen ist, größer als der äußere Durchmesser oder die äußeren Abmessungen der Windungen (3.1, 4.1) der elektrischen Spulen (3, 4) zur Übertragung von Daten ist.

7. System nach einem der vorhergehenden Ansprüche, **dadurch gekennzeichnet, dass** der innere Durchmesser oder freie Querschnitt, der von Windungen (4.1) einer der elektrischen Spulen (4) zur Übertragung von Daten umschlossen ist, größer als der äußere Durchmesser oder die äußeren Abmessungen der Windungen (3.1) der jeweils anderen elektrischen Spule (3) zur Übertragung von Daten ist.

8. System nach einem der vorhergehenden Ansprüche, **dadurch gekennzeichnet, dass** die Windungen mindestens einer elektrischen Spule (1, 2, 1a, 2a, 3, 4) zur Übertragung von Daten in Form einer 8 ausgebildet sind.

## Claims

1. System for wirelessly transmitting power and data, in which at least two coils (1, 2, 1a, 2a, 3, 4) or electrical conductor tracks arranged at a distance from one another for transmitting power are present and
at least one respective electrical coil (1, 2, 1a, 2a, 3, 4) for transmitting power and at least one respective corresponding electrical coil (1, 2, 1a, 2a, 3, 4) or electrical conductor track for transmitting data are connected to a respective electrical AC voltage source, wherein
at least one electrical AC voltage source is modulable, wherein
the electrical coils (1, 2, 1a, 2a, 3, 4) or electrical conductor tracks for transmitting data are operated with electrical voltage at a frequency that is lower than the frequency at which an electrical voltage for transmitting power by means of the electrical coils (1, 2, 1a, 2a, 3, 4) or electrical conductor tracks for transmitting power is used and
the turns (1.1, 2.1) of each electrical coil (1, 2) for transmitting power are arranged in a respective plane A in which a turn (3.1, 4.1) arranged at an end outer edge of the corresponding electrical coil (3, 4) for transmitting data is arranged and
the turns (3.1, 4.1) of the electrical coils (3, 4) for transmitting data each spirally form an annular coil (3, 4), wherein
the planes A in which the individual turns (1.1, 2.1) of the electrical coils (1, 2) for transmitting power are arranged and the median longitudinal axes B of the turns (3.1, 4.1) of the electrical coils (3, 4) for transmitting data are not oriented parallel to one another.

2. System according to Claim 1, **characterized in that** the frequency for transmitting power is at least five times, preferably at least 10 times, higher than the frequency for transmitting data.

3. System according to Claim 1 or 2, **characterized in that** the frequency for transmitting data is in the range from 5 kHz to 15 kHz.

4. System according to one of the preceding claims, **characterized in that** at least one electrical coil (1, 2, 1a, 2a, 3, 4) or electrical conductor track for transmitting data has a filter (5, 6), preferably a bandpass filter, low-pass filter, connected to it, by means of which separation of the frequencies used for transmitting data and power is achievable and superimposition thereof is preventable.

5. System according to one of the preceding claims, **characterized in that** the planes A in which the individual turns (1.1, 2.1) of the electrical coils (1, 2) for transmitting power are arranged and the median longitudinal axes B of the turns (3.1, 4.1) of the electrical coils (3, 4) for transmitting data are oriented at an angle in the range between 45° and 90°, preferably at right angles to one another.

6. System according to one of the preceding claims, **characterized in that** the internal diameter or free cross-section surrounded by turns (1.1, 2.1) of the electrical coils (1, 2) for transmitting power is greater than the external diameter or the external dimensions of the turns (3.1, 4.1) of the electrical coils (3, 4) for transmitting data.

7. System according to one of the preceding claims, **characterized in that** the internal diameter or free cross-section surrounded by turns (4.1) of one of the electrical coils (4) for transmitting data is greater than the external diameter or the external dimensions of the turns (3.1) of the other electrical coil (3) for transmitting data.

8. System according to one of the preceding claims, **characterized in that** the turns of at least one electrical coil (1, 2, 1a, 2a, 3, 4) for transmitting data are in the form of an 8.

## Revendications

1. Système de transmission sans fil d'énergie et de données, dans lequel au moins deux bobines (1, 2, 1a, 2a, 3, 4) ou pistes conductrices électriques disposées à distance l'une de l'autre sont présentes pour la transmission d'énergie, et
respectivement au moins une bobine (1, 2, 1a, 2a, 3, 4) électrique de transmission d'énergie et au moins une bobine (1, 2, 1a, 2a, 3, 4) électrique ou piste conductrice électrique respectivement correspondante de transmission de données sont connectées à respectivement une source de tension alternative électrique,
au moins une source de tension alternative électrique étant modulable,
les bobines (1, 2, 1a, 2a, 3, 4) électriques ou pistes conductrices électriques de transmission de données étant mises en œuvre avec une tension électrique ayant une fréquence qui est inférieure à la fréquence avec laquelle une tension électrique est utilisée pour la transmission d'énergie au moyen des bobines (1, 2, 1a, 2a, 3, 4) électriques ou pistes conductrices électriques de transmission d'énergie, et
les enroulements (1.1, 2.1) de chaque bobine (1, 2) électrique de transmission d'énergie sont disposés dans un plan A respectif dans lequel est disposé un enroulement (3.1, 4.1) disposé sur un bord extérieur, côté frontal, de la bobine (3, 4) électrique correspondante de transmission de données, et
les enroulements (3.1, 4.1) des bobines (3, 4) électriques de transmission de données formant une bobine (3, 4) annulaire respectivement en forme de spirale,
les plans A dans lesquels sont disposés les enroulements (1.1, 2.1) individuels des bobines (1, 2) électriques de transmission d'énergie et les axes longitudinaux B centraux des enroulements (3.1, 4.1) des bobines (3, 4) électriques de transmission de données n'étant pas orientés parallèlement entre eux.

2. Système selon la revendication 1, **caractérisé en ce que** la fréquence de transmission d'énergie est au moins cinq fois, de préférence au moins dix fois, plus grande que la fréquence de transmission de données.

3. Système selon la revendication 1 ou 2, **caractérisé en ce que** la fréquence de transmission de données se situe dans la plage de 5 kHz à 15 kHz.

4. Système selon l'une des revendications précédentes, **caractérisé en ce qu'**un filtre (5, 6), de préférence un filtre passe-bande, ou un filtre passe-bas, est connecté à au moins une bobine (1, 2, 1a, 2a, 3, 4) électrique ou piste conductrice électrique de transmission de données, filtre avec lequel une séparation des fréquences qui sont utilisées pour la transmission de données et d'énergie peut être obtenue, et leur superposition peut être évitée.

5. Système selon l'une des revendications précédentes, **caractérisé en ce que** les plans A dans lesquels sont disposés les enroulements (1.1, 2.1) individuels des bobines (1, 2) électriques de transmission d'énergie, et les axes longitudinaux B centraux des enroulements (3.1, 4.1) des bobines (3, 4) électriques de transmission de données sont orientés en formant un angle dans la plage de 45° à 90°, de préférence de façon perpendiculaire entre eux.

6. Système selon l'une des revendications précédentes, **caractérisé en ce que** le diamètre intérieur ou la section transversale libre qui est entouré(e) d'enroulements (1.1, 2.1) des bobines (1, 2) électriques de transmission d'énergie est plus grand(e) que le diamètre extérieur ou les dimensions extérieures des enroulements (3.1, 4.1) des bobines (3, 4) électriques de transmission de données.

7. Système selon l'une des revendications précédentes, **caractérisé en ce que** le diamètre intérieur ou la section transversale libre qui est entouré(e) d'enroulements (4.1) d'une des bobines (4) électriques de transmission de données est plus grand(e) que le diamètre extérieur ou les dimensions extérieures des enroulements (3.1) de respectivement l'autre bobine (3) électrique de transmission de données.

8. Système selon l'une des revendications précédentes, **caractérisé en ce que** les enroulements d'au moins une bobine (1, 2, 1a, 2a, 3, 4) électrique de transmission de données sont en forme de 8.
